# EUROPÄISCHE PATENTSCHRIFT

(11) **EP 3 109 135 B1**
(45) Veröffentlichungstag und Bekanntmachung des Hinweises auf die Patenterteilung: **02.11.2022**
(21) Anmeldenummer: 16167383.5
(22) Anmeldetag: 28.04.2016
(51) Int. Cl.: B62D 25/02, B60P 3/32, B62D 25/04

(54) **FUNKTIONSDURCHBRUCH FÜR FREIZEITFAHRZEUG ODER REISEMOBIL**
FUNCTION BREAKTHROUGH FOR RECREATIONAL VEHICLE OR CAMPER VAN
OUVERTURE FONCTIONNELLE POUR VEHICULE DE LOISIR OU CAMPING-CAR

(30) Priorität: 26.06.2015 DE 102015110371
(43) Veröffentlichungstag der Anmeldung: 28.12.2016
(73) Patentinhaber: Hymer GmbH & Co. KG, 88339 Bad Waldsee (DE)
(72) Erfinder: Dorn, Günter, 88281 Schlier (DE)
(74) Vertreter: Waller, Stefan

(56) Entgegenhaltungen:
- DE-A1-102007 039 315
- DE-A1-102013 002 306
- DE-B3-102014 001 863
- DE-U1- 8 712 242
- US-A1- 2015 001 883
- US-B2- 7 581 782
- US-B2- 8 262 153
- Feuerwehr Krelingen: "FTH - PKW - Rettung", youtube, 9 January 2014 (2014-01-09), page 1 pp., XP054978334, Retrieved from the Internet: URL:https://www.youtube.com/watch?v=LVJIv9 OvIRQ [retrieved on 2018-05-09]
- Anonymous ET AL: "Kia GT4 Stinger Concept - Car Body Design", Detroit 2014 Motor Show, 17 January 2014 (2014-01-17), XP055563407, Internet Retrieved from the Internet: URL:https://www.carbodydesign.com/2014/01/ kia-gt4-stinger-concept/ [retrieved on 2019-02-28]

## Beschreibung

Die Erfindung betrifft ein Reisemobil oder kastenförmiges Freizeitfahrzeug, umfassend einen Karosserieunterbau, einen Dachbereich, wenigstens eine Fahrzeugwand mit einer Innenseite und einer Außenseite und wenigstens eine C-Fahrzeugsäule, wobei die C-Fahrzeugsäule unterbrochen ist.

Reisemobile oder kastenförmige Freizeitfahrzeuge sind den einschlägigen Fachkreisen seit geraumer Zeit hinlänglich bekannt.

Es ist im Zusammenhang mit eben bekannten Reisemobilen oder kastenförmigen Freizeitfahrzeugen ebenso seit jeher von großer Problematik, dass der zur Verfügung stehende Platz bzw. Raum im Inneren solcher Fahrzeuge oft nur sehr begrenzt ist. Gleichzeitig sind jedoch die Anforderungen an die Nutzung solcher Fahrzeuge sehr hoch, insbesondere im Hinblick auf die Nutzbarkeit des Innenraumes. Beispielsweise sollen solche Fahrzeuge bei Benutzung einen sehr hohen Wohnstandard nachstellen und beispielsweise Küche, Sanitär, Schlaf- und Aufenthaltsräume sowie ggf. weitere Nutzräume bereitstellen. Dies bedeutet für die Gestaltung bzw. Konstruktion solcher Reisemobile oder kastenförmiger Freizeitfahrzeuge eine große Herausforderung.

Beispielsweise besteht hinsichtlich der Toilette und insbesondere hinsichtlich deren Ein- und Ausbau eine erhöhte Problematik, die sich aus den beengten Platzbedingungen solcher Fahrzeuge ergibt. Es ist bei gewissen Baureihen von Reisemobilen oder Freizeitfahrzeugen beispielsweise bekannt, dass die Toilette, die in solchen Fahrzeugen üblicherweise transportabel ausgestaltet ist, sehr mühselig und oftmals umständlich der entsprechend ausgestalteten Aufnahme entnommen bzw. eingesetzt werden kann. Dem Fachmann ist hierzu geläufig, dass die Entnahme zumindest eines Tanks oder eines Funktionsvolumens von einer Außenseite des Fahrzeugs erfolgt und ein Einführen ebenso. Es ist dementsprechend eine Öffnung in einer Fahrzeugwand zu schaffen, durch welche die Toilette oder ein Tank ein- bzw. ausgeführt werden kann. Diese Öffnung muss zudem so in der Fahrzeugwand positioniert und angeordnet sein, dass zumindest in diesem Bereich auch die Nutzbarkeit der Toilette im Innenraum des Fahrzeugs sichergestellt ist. Dies bedeutet bei heutigem Standard, dass im Bereich der Öffnung in der Fahrzeugwand ein Sanitärbereich angeordnet ist.

Um auch weitere Räume zu schaffen, ist somit eine komplexe Raumgestaltung von Nöten. Oftmals lassen sich diesbezüglich viele verschiedene Aspekte konstruktiv nicht miteinander vereinen, woraus resultiert, dass Nutzungsmöglichkeiten solcher Fahrzeuge hinsichtlich ihrer begrenzten räumlichen Verhältnisse, insbesondere des Innenraumes begrenzt sind. Flexibilitäten bei der Positionierung und der Raumplanung werden dadurch eingeschränkt.

Aus dem Stand der Technik der DE 10 2013 002 306 A1 kennt man bereits eine Fahrzeugsäule, insbesondere B-Säule eines Kraftfahrzeugs, bei der vorgesehen ist, dass die Grundstruktur wenigstens zwei miteinander verbundene Rohrprofile aufweist oder daraus gebildet ist. In der DE 10 2007 039 315 A1 ist ein Transport-Fahrzeug beschrieben, bei dem der Aufbau im Heckbereich links- und rechtsseitig jeweils einen stetig nach innen gebogenen seitlichen Verjüngungsabschnitt aufweist. In der US 2015/0001883 A1 ist ein Wandabschnitt für ein Fahrzeug offenbart. Aus der DE 87 12 242 U1 kennt man bereits einen Wohnwagen, Campingmobil oder dergleichen, bei welchem eine Abrundung parallel zu einer von der Fahrtrichtung und der Vertikalen aufgespannten Ebene zwischen zwei Aufbauwänden durch ein Bogen-Verbindungsstück erzielt wird. Weiterhin ist aus der US 7 581 782 B2 eine Öffnung in einer Fahrzeugsäule mit Aufnahme für die Gurtspule bekannt.

Aufgabe der Erfindung ist es somit, die Nutzungsmöglichkeiten von Reisemobilen oder kastenförmigen Freizeitfahrzeugen hinsichtlich ihrer begrenzten räumlichen Verhältnisse, insbesondere des Innenraumes, zu verbessern.

Zur Lösung der Aufgabe wird ein Reisemobil oder kastenförmiges Freizeitfahrzeug vorgeschlagen, umfassend einen Karosserieunterbau, einen Dachbereich, wenigstens eine Fahrzeugwand mit einer Innenseite (IS) und einer Außenseite (AS) und wenigstens einer C-Fahrzeugsäule, wobei die C-Fahrzeugsäule ein Tragprofil mit wenigstens zwei Außenkanten und mindestens einen Anbindungsabschnitt umfasst, wobei die wenigstens zwei Außenkanten über mindestens einen Profilabschnitt miteinander verbunden sind, wobei die wenigstens zwei Außenkanten mit einem unteren Ende und einem oberen Ende zwischen Karosserieunterbau und Dachbereich angeordnet sind und wobei der
mindestens eine Anbindungsabschnitt mit dem Karosserieunterbau und/oder dem Dachbereich und/oder der wenigstens einen Fahrzeugwand verbunden ist, dadurch gekennzeichnet, dass die C-Fahrzeugsäule wenigstens abschnittsweise entlang wenigstens einer Außenkante unterbrochen ist, wobei wenigstens ein Rahmenelement zumindest in einem Teilbereich der unterbrochenen C-Fahrzeugsäule angeordnet ist und/oder wenigstens ein Rahmenelement mit dem Karosserieunterbau und zumindest einem Teilbereich der C-Fahrzeugsäule und/oder mit einem Radkasten verbunden ist, wobei die wenigstens eine Fahrzeugwand zumindest eine Öffnung aufweist, welche zumindest teilweise im Bereich wenigstens einer unterbrochenen Außenkante angeordnet ist und wobei eine Öffnung wenigstens eines überwiegend auf der Innenseite (IS) angeordneten Rahmenelements und wenigstens eine Öffnung in der Fahrzeugwand aufeinander ausgerichtet sind.

Beispielsweise kann der unterbrochene Bereich des Verbindungselements als Stauraum verwendet werden. Denkbar ist weiterhin, den Platz- bzw. Raumgewinn, der mittels des unterbrochenen Verbindungselements geschaffen wird, für einen Durchbruch nach Außen, insbesondere eine Klappe oder dergleichen zu nutzen.

Erfindungsgemäß ist vorgesehen, dass wenigstens ein Rahmenelement zumindest in einem Teilbereich des unterbrochenen Verbindungselements angeordnet ist und/oder wenigstens ein Rahmenelement mit dem Karosserieunterbau und zumindest einem Teilbereich des Verbindungselementes und/oder mit einem Radkasten verbunden ist, wobei die wenigstens eine Fahrzeugwand zumindest eine Öffnung aufweist, welche zumindest teilweise im Bereich wenigstens einer unterbrochenen Außenkante angeordnet ist und wobei eine Öffnung wenigstens eines überwiegend auf der Innenseite angeordneten Rahmenelements und wenigstens eine Öffnung in der Fahrzeugwand aufeinander ausgerichtet sind.

Die Öffnung in der Fahrzeugwand befindet sich somit in einem Bereich der Außenkante bzw. in einem Bereich des Verbindungselements. Dadurch kann die Öffnung beliebig in der Fahrzeugwand angeordnet werden. Dies ermöglicht in ganz besonderem Maße eine erhöhte Flexibilität bezüglich der Konstruktion von Reisemobilen oder kastenförmigen Freizeitfahrzeugen. Ein Rahmenelement ermöglicht eine Stabilisierung des unterbrochenen Verbindungselements.

Erfindungsgemäss ist vorgesehen, dass die wenigstens eine Außenkante in einem Bereich des Karosserieunterbaus zumindest eine Unterbrechung aufweist.

Eine derart angeordnete Unterbrechung ermöglicht somit eine Nutzbarkeit im bodennahen Bereich des Reisemobiles oder kastenförmigen Freizeitfahrzeuges. Eine weitere Ausgestaltung der Erfindung sieht vor, dass das Verbindungselement ein Tragprofil mit zwei Außenkanten umfasst, wobei beide Außenkanten unterbrochen sind und/oder wenigstens eine Außenkante zumindest zwei Unterbrechungen aufweist.

In einer weiteren Ausgestaltung der Erfindung kann vorgesehen sein, dass das Verbindungselement entlang seiner Längserstreckung (L) an wenigstens zwei verschiedenen in Quererstreckung (Q) orientieren Bereichen vollständig unterbrochen ist.

Aus einem derart unterbrochenen Verbindungselement, das in anderen Worten abschnittsweise entfernt wird, folgt, dass ein entsprechend der Größe des entfernten Abschnitts des Verbindungselements gebildetes Volumen bzw. Platz geschaffen wird.

Ein solches Rahmenelement ermöglicht eine Stabilisierung des unterbrochenen Verbindungselements.

Das Verbindungselement kann zwischen dem Karosserieunterbau und dem Dachbereich derart unterbrochen werden, dass es im verbliebenen Bereich sowohl mit dem Dachbereich als auch mit dem Karosserieunterbau verbunden ist.

Ebenfalls möglich ist, dass das Rahmenelement unrund und/oder einstückig ausgestaltet ist.

Ein solches Rahmenelement ist kostengünstig mit wenig Arbeitsaufwand produzierbar. Ein einstückiges Rahmenelement kann als abgekantetes Blechelement oder Profil ausgebildet sein, welches sich einfach flächig herstellen und mittels Abkant- oder Biegemechanik ausformen lässt.

Es kann auch vorgesehen sein, dass das Rahmenelement mittels wenigstens eines Verbindungselements zumindest mit der Fahrzeugwand, dem Karosserieunterbau oder dem Verbindungselement verbunden ist.

Dadurch erfolgt eine Stabilisierung bzw. eine Fixierung des Rahmenelementes und somit auch eine insgesamt erhöhte Stabilität des gesamten Reisemobiles oder kastenförmigen Freizeitfahrzeugs. Die tragende Funktion des Verbindungselements kann dadurch wieder hergestellt oder sogar noch verbessert werden, da das Rahmenelement die ursprünglich erzielte Statik der Karosserie wieder aufgreift und bereitstellt.

Eine vorteilhafte Ausgestaltung kann auch vorsehen, dass das kastenförmige Rahmenelement mittels einer Kleb- und/oder Schraubverbindung wenigstens mit dem Karosserieunterbau oder dem Verbindungselement verbunden ist.

Dadurch wird eine Möglichkeit der Befestigung des Rahmenelements bereitgestellt, die einfach und kostengünstig durchführbar ist und nur wenige apparative Voraussetzungen mit sich bringt.

Eine Ausgestaltung der Erfindung kann vorsehen, dass ein Rahmenelement flanschartig mit der Innenseite und auf der Außenseite der Fahrzeugwand verbunden ist.

Eine weitere Ausgestaltung der Erfindung kann vorsehen, dass zumindest die Außenseite der Fahrzeugwand dem Rahmenelement gegenüberliegend eine Öffnung umfasst.

Die Erfindung betrifft weiterhin ein Verfahren zur Schaffung einer Öffnung in einem Wandabschnitt eines Reisemobiles oder kastenförmigen Freizeitfahrzeugs, wobei folgende Schritte erfolgen:
a) Heraustrennen wenigstens eines Säulenabschnitts einer Fahrzeugsäule (A-, B-, C- oder D-Säule) und
b) Entfernen eines Wandabschnitts einer Fahrzeugwand zur Schaffung einer Öffnung, welche überwiegend in einem Bereich des herausgetrennten Säulenabschnitts angeordnet ist, und wobei die Schritte a) und b) nacheinander in beliebiger Reihenfolge oder gleichzeitig ausgeführt werden können, wobei ein Rahmenelement wenigstens in einen Teilbereich des Wandabschnitts und/oder des Säulenabschnitts derart eingebracht wird, dass das Rahmenelement zumindest in einem Teilbereich des unterbrochenen Verbindungselements angeordnet ist und/oder wenigstens ein Rahmenelement mit dem Karosserieunterbau und zumindest einem Teilbereich des Verbindungselementes und/oder mit einem Radkasten verbunden ist, wobei die wenigstens eine Fahrzeugwand zumindest eine Öffnung aufweist, welche zumindest teilweise im Bereich wenigstens einer unterbrochenen Außenkante angeordnet ist und wobei eine Öffnung wenigstens eines überwiegend auf der Innenseite angeordneten Rahmenelements und wenigstens eine Öffnung in der Fahrzeugwand aufeinander ausgerichtet sind.

Weiterhin kann das Verfahren vorsehen, dass wenigstens eine Vorrichtung zum Öffnen und Schließen im Bereich der Fahrzeugwand angebracht wird, derart, dass die Vorrichtung einen überwiegenden Bereich der Öffnung abdeckt.

Weitere vorteilhafte Ausgestaltungen der Erfindung ergeben sich aus den nachfolgend beschriebenen Zeichnungen eines Ausführungsbeispiels.

Es zeigt:
- Fig. 1: Eine schematische Darstellung eines Ausschnitts eines Reisemobiles oder kastenförmigen Freizeitfahrzeuges aus dem Stand der Technik;
- Fig. 2: Eine schematische Darstellung eines Ausschnitts eines erfindungsgemäßen Reisemobiles oder kastenförmigen Freizeitfahrzeuges;
- Fig. 3: Eine schematische Darstellung einer weiteren Ausgestaltung eines Ausschnitts eines erfindungsgemäßen Reisemobiles oder kastenförmigen Freizeitfahrzeuges.
- Fig. 4: Eine schematische Detailansicht des Verbindungselementes.
- Fig. 5: Eine Schnittansicht entlang der Linie A-A der Fig. 4

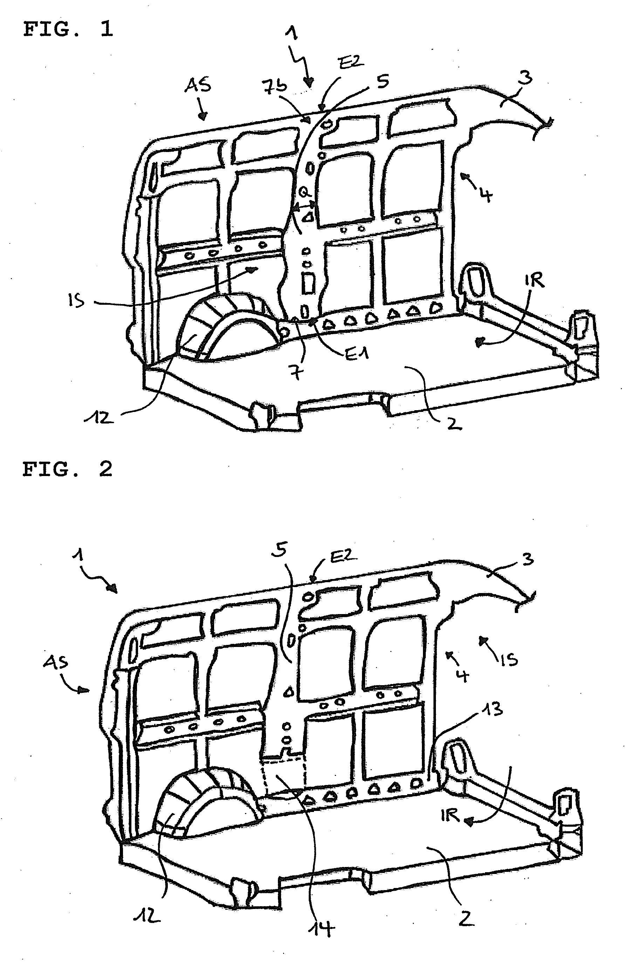

In der Figur 1 ist ein Abschnitt eines Reisemobiles oder kastenförmigen Freizeitfahrzeuges 1, wie es aus dem Stand der Technik bekannt ist, gezeigt. Hierbei weist das Reisemobil oder kastenförmige Freizeitfahrzeug 1 einen Karosserieunterbau 2, einen Dachbereich 3 und eine Fahrzeugwand 4 auf. Der gezeigte Abschnitt bezieht sich hierbei auf den Nutzbereich, der größtenteils dem Cockpit bzw. der Frontseite des Reisemobiles oder kastenförmigen Freizeitfahrzeuges 1 abgewandt ist. Hierbei ist die Fahrzeugwand 4 mit dem Dachbereich 3 und dem Karosserieunterbau 2 verbunden. Eine derartige Verbindung kann beispielsweise mittels eines Klebstoffes erfolgen. Es ist jedoch auch denkbar, die Verbindung ohne Verwendung von Klebstoffen und beispielsweise durch Verwendung von Schrauben, Nieten, etc. zu realisieren. Aufgrund der Tatsache, dass die Fahrzeugwand 4 nur geringe Dicken aufweist, sind zur Stabilisierung selbiger und somit des gesamten Reisemobiles oder kastenförmigen Freizeitfahrzeuges 1 Verbindungselemente 5 vorgesehen. Es ist dies aus dem Stand der Technik, insbesondere im Bereich Karosseriebau bekannt. Üblicherweise wird synonym zu dem Begriff Verbindungselement 5 der Ausdruck "Fahrzeugsäule" verwendet. Es ist weiterhin üblich, die Fahrzeugsäulen, die gewissermaßen tragende Elemente darstellen bzw. die Statik eines Fahrzeuges maßgeblich beeinflussen, beginnend von der Frontseite mit den Buchstaben A, B, C, usw. zu benennen. Im Falle eines Reisemobiles oder kastenförmigen Freizeitfahrzeuges 1 können somit die Begriffe A-, B-, C-, D-, usw. Säule verwendet werden, die mit dem Begriff Verbindungselement 5 gleichzusetzen sind. Im Sinne der Erfindung bezieht sich der Begriff Verbindungselement 5 auf eine vertikale Ausrichtung, entsprechend dieser Anordnung von bekannten Fahrzeugsäulen. Das in der Figur 1 gezeigte Verbindungselement 5 kann einer so genannten C-Säule gleichgesetzt werden.

Das Verbindungselement 5 ist über ein Eckprofil 13 mit dem Karosserieunterbau 2 verbunden. Weiterhin ist das Eckprofil 13 mit dem Radkasten 12 verbunden. Es wird in aller Regel auf diese Art und Weise eine Stabilisierung der Fahrzeugwand 4 realisiert.

In der Figur 2 ist eine schematische Darstellung eines Ausschnitts eines erfindungsgemäßen Reisemobiles oder kastenförmigen Freizeitfahrzeuges 1 dargestellt. In gleicher Weise weist das erfindungsgemäße Reisemobil oder kastenförmige Freizeitfahrzeug 1 einen Karosserieunterbau 2, einen Dachbereich, ein Eckprofil 13 und einen Radkasten 12 auf. In gleicher Weise umfasst das Reisemobil oder kastenförmige Freizeitfahrzeug auch eine Fahrzeugwand 4.

Das Verbindungselement 5 hingegen ist nicht mehr durchgängig zwischen dem Karosserieunterbau 2 und dem Dachbereich 3 angeordnet. Vielmehr ist ein Stück des Verbindungselements 5 entfernt. In anderen Worten ausgedrückt ist das Verbindungselement 5 abschnittsweise unterbrochen.

Es ist erfindungsgemäß unerheblich, ob das Verbindungselement 5 im Bereich des Karosserieunterbaus 2 oder im Bereich des Dachbereichs 3 unterbrochen ist. Es ist auch möglich, dass das Verbindungselement in etwa mittig in Bezug auf den Karosserieunterbau 2 und den Dachbereich 3 unterbrochen ist.

Aufgrund der Tatsache, dass das Verbindungselement 5 trotz der gezeigten Unterbrechung bzw. trotz des herausgetrennten Teils mit der Innenseite IS der Fahrzeugwand 4 verbunden ist, ist es auch möglich, dass das Verbindungselement 5 mehrfach unterbrochen ist.

Gestrichelt skizziert ist weiterhin eine Öffnung 14 in der Fahrzeugwand 4. Durch diese Öffnung 14 kann beispielsweise eine nicht näher dargestellte Toilette oder ein Tank in das Reisemobil oder kastenförmige Freizeitfahrzeug 1 ein- bzw. ausgeführt werden. In besonderem Maße ist dabei von Vorteil, dass nun die Öffnung 14 in einem zusätzlichen Bereich, bisher für Öffnungen nicht zugänglichen Bereich der Fahrzeugwand 4 angeordnet werden kann. Dies ermöglicht vollkommen neue Perspektiven bei der Raumgestaltung bzw. bei den Nutzungsmöglichkeiten solcher Reisemobile oder kastenförmige Freizeitfahrzeuge 1. In nicht näher dargestellter Weise kann im Bereich der Öffnung 14 auf der Innenseite IS der Fahrzeugwand 4 bzw. im Innenraum IR des Reisemobiles oder kastenförmigen Freizeitfahrzeuges 1 ein Sanitärbereich angeordnet sein. Dies würde es ermöglichen einen Innenraum IR des Reisemobiles oder kastenförmigen Freizeitfahrzeuges, beispielsweise von einem solchen Sanitärraum aus, durch das unterbrochene Verbindungselement 5 praktisch hindurch eine Öffnung 14 in der Fahrzeugwand 4 mit einem Außenbereich des Reisemobiles oder kastenförmigen Freizeitfahrzeuges 1 zu verbinden.

In nicht näher dargestellter Art und Weise ist für die Öffnung 14 eine Öffnungs- bzw. Verschließeinrichtung, z.B. eine Klappe vorgesehen. Beispielsweise kann diese Öffnungs- bzw. Verschließeinrichtung an der Außenseite AS der Fahrzeugwand 4 oder an der Innenseite IS der Fahrzeugwand 4 angeordnet sein. Es ist auch möglich, dass zwei Öffnungs- bzw. Verschließeinrichtungen, jeweils eine an der Innenseite IS und eine an der Außenseite AS der Fahrzeugwand 4 des Reisemobiles oder kastenförmigen Freizeitfahrzeuges 1 vorgesehen sind.

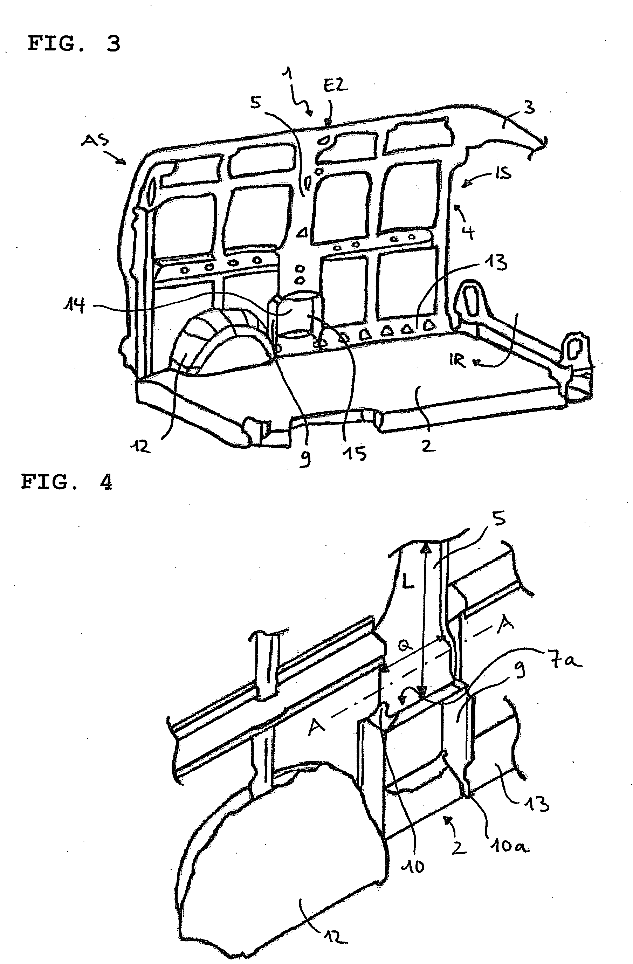

In der Figur 3 ist eine schematische Darstellung einer weiteren Ausgestaltung eines Ausschnitts eines erfindungsgemäßen Reisemobiles oder kastenförmigen Freizeitfahrzeuges 1 gezeigt, welches gleichermaßen einen Karosserieunterbau 2, einen Dachbereich 3, eine Fahrzeugwand 4, einen Radkasten 12 und ein Eckprofil 13 umfasst. Das Reisemobil oder kastenförmige Freizeitfahrzeug 1 umfasst zudem ein Verbindungselement 5. Dieses ist im gezeigten Ausführungsbeispiel mit dem Dachbereich 3 und der Fahrzeugwand 4 verbunden und unterbrochen.

Zwischen dem Karosserieunterbau 2 und dem Dachbereich 3 ist zusätzlich zum Verbindungselement 5 ein Rahmenelement 9 angeordnet. In anderen Worten ausgedrückt ist ein Abschnitt des Verbindungselements 5 entfernt und durch das Rahmenelement 9 ersetzt worden. Das Rahmenelement 9 dient dabei einer Stabilisierung des Bereichs, der durch das unterbrochene Verbindungselement 5 entstanden ist.

Im gezeigten Ausführungsbeispiel ist das Rahmenelement unrund, im Wesentlichen Rechteckig ausgestaltet. Das Rahmenelement 9 ist zudem einstückig ausgestaltet, z.B. als abgekantetes Blechelement gebildet.

Es ist auch möglich, dass das Rahmenelement 9 vieleckig ausgestaltet ist. Weiterhin ist es möglich, dass das Rahmenelement 8 mehrteilig ausgestaltet ist.

Im gezeigten Ausführungsbeispiel weist das Rahmenelement 9 eine Öffnung 15 auf. In nicht näher dargestellter Art und Weise kann das Rahmenelement auch mehrere Öffnungen aufweisen. Das Rahmenelement 9 kann sowohl mit dem Verbindungselement 5 als auch mit dem Karosserieunterbau 2, mit dem Eckprofil 13 oder mit dem Radkasten 12 verbunden werden. Denkbar sind auch Kombinationen daraus.

Das Rahmenelement 9 weist eine Öffnung 15 auf. Diese Öffnung 15 ist im Wesentlichen deckungsgleich mit der Öffnung 14 der Fahrzeugwand 4. Somit ist eine Verbindung zwischen der Außenseite des Reisemobiles oder kastenförmigen Freizeitfahrzeuges 1 und dessen Innenraum IR geschaffen, wobei die Verbindung durch das unterbrochene Verbindungselement 5 und das Rahmenelement 9 erfolgt. Es ist somit möglich, ein Objekt, beispielsweise eine transportable Toilette oder ein Tank, von der Außenseite in die Innenseite des Reisemobiles oder kastenförmigen Freizeitfahrzeuges 1 ein- bzw. auszubringen.

Es ist auch denkbar, dass beide Öffnungen 14 und 15 nicht passgenau bzw. deckungsgleich sind. Beispielsweise ist denkbar, dass die Öffnungen 14, 15 unterschiedliche Größen aufweisen.

In nicht näher dargestellter Art und Weise ist denkbar, dass das Rahmenelement 9 derart in der Fahrzeugwand 4 angeordnet ist, dass es auf der Innenseite IS und der Außenseite AS der Fahrzeugwand 4 angeordnet ist.

Weiterhin ist in nicht näher dargestellter Art und Weise denkbar, dass das Rahmenelement 9 an der Innenseite IS der Fahrzeugwand 4 und/oder der Außenseite AS der Fahrzeugwand 4 flanschartig angeordnet ist. Insbesondere kann das Rahmenelement 9 als Einsteckelement mit einem Kragen von außen her in die Öffnung 14 eingesteckt werden, um auf diese Weise eine nachhaltige Anbindung an die Fahrzeugwand 4 und die verbliebenen Abschnitte des Verbindungselement 5 bereit zu stellen.

In nicht näher dargestellter Art und Weise ist zudem denkbar, dass das Rahmenelement 9 bündig an der Außenseite AS der Fahrzeugwand 4 angeordnet ist.

Die Figur 4 zeigt eine detaillierte Ansicht, bei der insbesondere das Verbindungselement 5 und das Rahmenelement 9 hervorgehoben sind. Es ist hierbei ersichtlich, dass das Rahmenelement 9 mittels Verbindungsmittel 10, 10a mit dem Verbindungselement 5 und mit dem Karosserieunterbau 2 verbunden ist.

Es ist auch möglich, dass das Rahmenelement 9 mittels nur einem Verbindungsmittel 10, 10a mit dem Verbindungselement 5, dem Radkasten 12 oder dem Eckprofil 13 verbunden ist.

Denkbar ist auch, dass mehrere, d.h. mehr als zwei, Verbindungsmittel 10, 10a mit dem Rahmenelement 9, dem Radkasten 12 oder dem Eckprofil 13 verbunden sind.

Weiterhin ist möglich, dass keine Verbindungsmittel 10, 10a vorhanden sind und das Rahmenelement 9 mit dem Karosserieunterbau 2, dem Eckprofil 13 oder dem Radkasten 12 mittels einer Kleb- und/oder Schraubverbindung verbunden ist, wobei auch Kombinationen denkbar sind.

In nicht näher dargestellter Weise ist zudem denkbar, dass mehrere Rahmenelemente 9 in zwischen Karosserieunterbau 2 und Dachbereich 3 angeordnet sind, wobei die Anordnung zumindest teilweise im Bereich des Verbindungselements 5 erfolgt. dementsprechend ist auch denkbar, dass die Fahrzeugwand 4 mehrere Öffnungen 14 aufweist und somit mehrfache Verbindungen zwischen Außenseite AS der Fahrzeugwand 4 und Innenseite IS der Fahrzeugwand 4 geschaffen werden.

Im gezeigten Ausführungsbeispiel ist das Rahmenelement 9 bündig zu dem Karosserieunterbau angeordnet.

Es ist in einer Ausgestaltung der Erfindung auch denkbar, das Rahmenelement 9 nicht bündig mit dem Karosserieunterbau 2 anzuordnen.

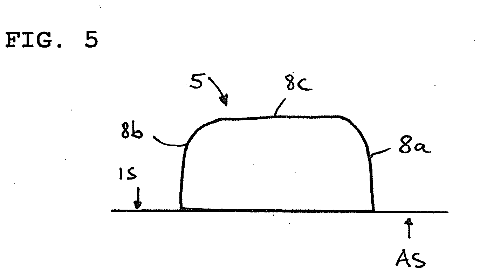

In Figur 5 ist ein Schnitt entlang der Linie A-A in Fig. 4 dargestellt. Das Rahmenelement 9 ist schematisch hier als Profil mit einer rechten Außenkante 8a, einer linken Außenkante 8b und einer Verbindungskante 8c ausgestattet. Das Rahmenelement 9 ist mit der Fahrzeugwand 4 auf bekannte Weise verbunden (Punkt-, Niet-, Klebverbindung, etc.). Die Anordnung des Rahmenelements 9 liegt auf der Innenseite IS der Fahrzeugwand 4, gegenüber der Außenseite AS. Es ist weiterhin ein Tragprofil 6 und ein Profilabschnitt 11 dargestellt.

### Bezugszeichenliste:

- 1: Reisemobil oder kastenförmiges Freizeitfahrzeug
- 2: Karosserieunterbau
- 3: Dachbereich
- 4: Fahrzeugwand
- 5: Verbindungselement
- 6: Tragprofil
- 7: Anbindungsabschnitt
- 8a,: rechte Außenkante
- 8b: linke Außenkante
- 8c: Verbindungskante
- 9: Rahmenelement
- 10, 10a: Verbindungsmittel
- 11: Profilabschnitt
- 12: Radkasten
- 13: Eckprofil
- 14: Öffnung (in der Fahrzeugwand (4))
- 15: Öffnung (in dem Rahmenelement (9))

- IS: Innenseite
- IR: Innenraum
- AS: Außenseite
- E1: Unteres Ende
- E2: Oberes Ende
- L: Längserstreckung
- Q: Quererstreckung

## Patentansprüche

1. Reisemobil oder kastenförmiges Freizeitfahrzeug (1), umfassend einen Karosserieunterbau (2), einen Dachbereich (3), wenigstens eine Fahrzeugwand (4) mit einer Innenseite (IS) und einer Außenseite (AS) und wenigstens einer C-Fahrzeugsäule,
wobei die C-Fahrzeugsäule ein Tragprofil (6) mit wenigstens zwei Außenkanten (8a, 8b) und mindestens einen Anbindungsabschnitt (7, 7a, 7b) umfasst, wobei die wenigstens zwei Außenkanten (8a, 8b) über mindestens einen Profilabschnitt (8c) miteinander verbunden sind, wobei die wenigstens zwei Außenkanten (8a, 8b) mit einem unteren Ende (E1) und einem oberen Ende (E2) zwischen Karosserieunterbau (2) und Dachbereich (3) angeordnet sind und wobei der mindestens eine Anbindungsabschnitt (7, 7a, 7b) mit dem Karosserieunterbau (2) und/oder dem Dachbereich (3) und/oder der wenigstens einen Fahrzeugwand (4) verbunden ist,
**dadurch gekennzeichnet,**
**dass** die C-Fahrzeugsäule wenigstens abschnittsweise entlang wenigstens einer Außenkante (8a, 8b) unterbrochen ist, wobei
wenigstens ein Rahmenelement (9) zumindest in einem Teilbereich der unterbrochenen C-Fahrzeugsäule angeordnet ist und/oder wenigstens ein Rahmenelement (9) mit dem Karosserieunterbau (2) und zumindest einem Teilbereich der C-Fahrzeugsäule und/oder mit einem Radkasten (12) verbunden ist, wobei die wenigstens eine Fahrzeugwand (4) zumindest eine Öffnung aufweist, welche zumindest teilweise im Bereich wenigstens einer unterbrochenen Außenkante (8, 8a) angeordnet ist und wobei eine Öffnung (15) wenigstens eines überwiegend auf der Innenseite (IS) angeordneten Rahmenelements (9) und wenigstens eine Öffnung (14) in der Fahrzeugwand (4) aufeinander ausgerichtet sind.

2. Reisemobil oder kastenförmiges Freizeitfahrzeug (1) nach Anspruch 1,
**dadurch gekennzeichnet,**
**dass** die wenigstens eine Außenkante (8a, 8b) in einem Bereich des Karosserieunterbaus (2) zumindest eine Unterbrechung aufweist.

3. Reisemobil oder kastenförmiges Freizeitfahrzeug (1) nach einem der vorangehenden Ansprüche,
**dadurch gekennzeichnet,**
**dass** die C-Fahrzeugsäule ein Tragprofil (6) mit zwei Außenkanten (8a, 8b) umfasst, wobei beide Außenkanten (8a, 8b) unterbrochen sind und/oder wenigstens eine Außenkante (8a, 8b) zumindest zwei Unterbrechungen aufweist.

4. Reisemobil oder kastenförmiges Freizeitfahrzeug (1) nach einem der vorangehenden Ansprüche,
**dadurch gekennzeichnet,**
**dass** die C-Fahrzeugsäule entlang ihrer Längserstreckung (L) an wenigstens zwei verschiedenen in Quererstreckung (Q) orientieren Bereichen vollständig unterbrochen ist.

5. Reisemobil oder kastenförmiges Freizeitfahrzeug (1) nach einem der vorangehenden Ansprüche,
**dadurch gekennzeichnet,**
**dass** ein Rahmenelement (9) überwiegend unrund und einstückig ausgestaltet ist.

6. Reisemobil oder kastenförmiges Freizeitfahrzeug (1) nach einem der vorangehenden Ansprüche,
**dadurch gekennzeichnet,**
**dass** ein Rahmenelement (9) mittels wenigstens einem Verbindungsmittel (10, 10a) zumindest mit der Fahrzeugwand (4), dem Karosserieunterbau (2) oder der C-Fahrzeugsäule verbunden ist.

7. Reisemobil oder kastenförmiges Freizeitfahrzeug (1) nach einem der vorangehenden Ansprüche,
**dadurch gekennzeichnet,**
**dass** das Rahmenelement (9) mittels einer Kleb- und/oder Schraubverbindung wenigstens mit dem Karosserieunterbau (2) oder der C-Fahrzeugsäule verbunden ist.

8. Reisemobil oder kastenförmiges Freizeitfahrzeug (1) nach einem der vorangehenden Ansprüche,
**dadurch gekennzeichnet,**
**dass** das Rahmenelement (9) flanschartig mit der Innenseite (IS) und auf der Außenseite (AS) der Fahrzeugwand (4) verbunden ist.

9. Reisemobil oder kastenförmiges Freizeitfahrzeug (1) nach einem der vorangehenden Ansprüche,
**dadurch gekennzeichnet,**
**dass** zumindest die Außenseite (AS) der Fahrzeugwand (4) dem Rahmenelement (9) gegenüberliegend eine Öffnung umfasst.

10. Verfahren zur Schaffung einer Öffnung in einem Abschnitt einer Fahrzeugwand eines Reisemobiles oder kastenförmigen Freizeitfahrzeugs nach Anspruch 1, **gekennzeichnet durch**
die folgenden Schritte:
a) Heraustrennen wenigstens eines Säulenabschnitts einer Fahrzeugsäule und
b) Entfernen eines Abschnitts einer Fahrzeugwand zur Schaffung einer Öffnung, welche überwiegend in einem Bereich des herausgetrennten Säulenabschnitts angeordnet ist, wobei die Schritte a) und b) nacheinander in beliebiger Reihenfolge oder gleichzeitig ausgeführt werden können,
wobei ein Rahmenelement wenigstens in einen Teilbereich des Wandabschnitts und/oder des Säulenabschnitts derart eingebracht wird, dass das Rahmenelement (9) zumindest in einem Teilbereich oder unterbrochenen C-Fahrzeugsäule angeordnet ist und/oder wenigstens ein Rahmenelement (9) mit dem Karosserieunterbau (2) und zumindest einem Teilbereich der C-Fahrzeugsäule und/oder mit einem Radkasten (12) verbunden ist, wobei die wenigstens eine Fahrzeugwand (4) zumindest eine Öffnung (14) aufweist, welche zumindest teilweise im Bereich wenigstens einer unterbrochenen Außenkante (8, 8a) angeordnet ist und wobei eine Öffnung (15) wenigstens eines überwiegend auf der Innenseite (IS) angeordneten Rahmenelements (9) und wenigstens eine Öffnung (14) in der Fahrzeugwand (4) aufeinander ausgerichtet sind.

11. Verfahren nach Anspruch 10,
**dadurch gekennzeichnet,**
**dass** wenigstens eine Vorrichtung zum Öffnen und Schließen im Bereich der Fahrzeugwand angebracht wird, derart, dass die Vorrichtung einen überwiegenden Bereich der Öffnung abdeckt.

## Claims

1. Motorhome or box-like recreational vehicle (1), comprising a vehicle body substructure (2), a roof region (3), at least one vehicle wall (4) with an inner side (IS) and an outer side (AS) and at least one vehicle C-pillar,
wherein the vehicle C-pillar comprises a support profile (6) with at least two outer edges (8a, 8b), and at least one attachment portion (7, 7a, 7b), wherein the at least two outer edges (8a, 8b) are connected together via at least one profile portion (8c), wherein the at least two outer edges (8a, 8b) are arranged with a lower end (E1) and an upper end (E2) between the vehicle body substructure (2) and the roof region (3) and wherein the at least one attachment portion (7, 7a, 7b) is connected to the vehicle body substructure (2) and/or the roof region (3) and/or the at least one vehicle wall (4), **characterized**
**in that** the vehicle C-pillar is interrupted at least in portions along at least one outer edge (8a, 8b), wherein
at least one frame element (9) is arranged at least in one subregion of the interrupted vehicle C-pillar and/or at least one frame element (9) is connected to the vehicle body substructure (2) and to at least one subregion of the vehicle C-pillar and/or to a wheel arch (12), wherein the at least one vehicle wall (4) has at least one opening which is arranged at least partially in the region of at least one interrupted outer edge (8, 8a) and wherein an opening (15) in at least one frame element (9) arranged mainly on the inner side (IS) and at least one opening (14) in the vehicle wall (4) are oriented towards one another.

2. Motorhome or box-like recreational vehicle (1) according to Claim 1,
**characterized**
**in that** the at least one outer edge (8a, 8b) has at least one interruption in a region of the vehicle body substructure (2).

3. Motorhome or box-like recreational vehicle (1) according to either of the preceding claims, **characterized**
**in that** the vehicle C-pillar comprises a support profile (6) with two outer edges (8a, 8b), wherein both outer edges (8a, 8b) are interrupted and/or at least one outer edge (8a, 8b) has at least two interruptions.

4. Motorhome or box-like recreational vehicle (1) according to one of the preceding claims, **characterized**
**in that** the vehicle C-pillar is interrupted completely, along its longitudinal extension (L), in at least two different regions oriented in transverse extension (Q).

5. Motorhome or box-like recreational vehicle (1) according to one of the preceding claims, **characterized**
**in that** a frame element (9) is configured mainly in a non-round manner and in one piece.

6. Motorhome or box-like recreational vehicle (1) according to one of the preceding claims, **characterized**
**in that** a frame element (9) is connected at least to the vehicle wall (4), to the vehicle body substructure (2) or to the vehicle C-pillar by means of at least one connecting means (10, 10a).

7. Motorhome or box-like recreational vehicle (1) according to one of the preceding claims, **characterized**
**in that** the frame element (9) is connected at least to the vehicle body substructure (2) or to the vehicle C-pillar by means of an adhesive bond and/or a screwed connection.

8. Motorhome or box-like recreational vehicle (1) according to one of the preceding claims, **characterized**
**in that** the frame element (9) is connected in a flange-like manner to the inner side (IS) and on the outer side (AS) of the vehicle wall (4).

9. Motorhome or box-like recreational vehicle (1) according to one of the preceding claims, **characterized**
**in that** at least the outer side (AS) of the vehicle wall (4) comprises, opposite the frame element (9), an opening.

10. Method for creating an opening in a portion of a vehicle wall of a motorhome or box-like recreational vehicle according to Claim 1,
**characterized by**
the following steps:
a) detaching at least one pillar portion of a vehicle pillar and
b) removing a portion of a vehicle wall to create an opening which is arranged mainly in a region of the detached pillar portion, wherein steps a) and b) can be carried out in succession in any order or at the same time,
wherein a frame element is introduced at least into a subregion of the wall portion and/or of the pillar portion such that the frame element (9) is arranged at least in a subregion or interrupted vehicle C-pillar and/or at least one frame element (9) is connected to the vehicle body substructure (2) and to at least one subregion of the vehicle C-pillar and/or to a wheel arch (12), wherein the at least one vehicle wall (4) has at least one opening (14) which is arranged at least partially in the region of at least one interrupted outer edge (8, 8a), and wherein an opening (15) at least in a frame element (9) arranged mainly on the inner side (IS) and at least one opening (14) in the vehicle wall (4) are oriented towards one another.

11. Method according to Claim 10,
**characterized**
**in that** at least one device for opening and closing is attached in the region of the vehicle wall such that the device covers the majority of the opening.

## Revendications

1. Camping-car ou véhicule de loisirs en forme de caisse (1), comportant un soubassement de carrosserie (2), une région de toit (3), au moins une paroi de véhicule (4) dotée d'un côté intérieur (IS) et d'un côté extérieur (AS) et au moins un montant C de véhicule,
le montant C de véhicule comportant un profilé porteur (6) doté d'au moins deux bords extérieurs (8a, 8b) et d'au moins une partie de connexion (7, 7a, 7b), les au moins deux bords extérieurs (8a, 8b) étant reliés les uns aux autres par le biais d'au moins une partie de profilé (8c), les au moins deux bords extérieurs (8a, 8b) étant disposés avec une extrémité inférieure (El) et une extrémité supérieure (E2) entre le soubassement de carrosserie (2) et la région de toit (3) et l'au moins une partie de connexion (7, 7a, 7b) étant reliée au soubassement de carrosserie (2) et/ou à la région de toit (3) et/ou à l'au moins une paroi de véhicule (4),
**caractérisé en ce que**
le montant C de véhicule est discontinu au moins dans certaines parties le long d'au moins un bord extérieur (8a, 8b), au moins un élément de cadre (9) étant disposé au moins dans une région partielle du montant C de véhicule discontinu et/ou au moins un élément de cadre (9) étant relié au soubassement de carrosserie (2) et au moins à une région partielle du montant C de véhicule et/ou à un passage de roue (12), l'au moins une paroi de véhicule (4) comprenant au moins une ouverture, laquelle est disposée au moins partiellement dans la région d'au moins un bord extérieur (8, 8a) discontinu et une ouverture (15) d'au moins un élément de cadre (9) disposé principalement sur le côté intérieur (IS) et au moins une ouverture (14) dans la paroi de véhicule (4) étant alignées l'une par rapport à l'autre.

2. Camping-car ou véhicule de loisirs en forme de caisse (1) selon la revendication 1,
**caractérisé en ce que**
l'au moins un bord extérieur (8a, 8b) comprend au moins une discontinuité dans une région du soubassement de carrosserie (2).

3. Camping-car ou véhicule de loisirs en forme de caisse (1) selon l'une des revendications précédentes, **caractérisé en ce que**
le montant C de véhicule comporte un profilé porteur (6) doté de deux bords extérieurs (8a, 8b), les deux bords extérieurs (8a, 8b) étant discontinus et/ou au moins un bord extérieur (8a, 8b) comprenant au moins deux discontinuités.

4. Camping-car ou véhicule de loisirs en forme de caisse (1) selon l'une des revendications précédentes, **caractérisé en ce que**
le montant C de véhicule est complètement discontinu le long de son étendue longitudinale (L) au niveau d'au moins deux régions différentes orientées dans l'étendue transversale (Q).

5. Camping-car ou véhicule de loisirs en forme de caisse (1) selon l'une des revendications précédentes, **caractérisé en ce**
**qu'**un élément de cadre (9) est configuré principalement de manière non circulaire et d'une seule pièce.

6. Camping-car ou véhicule de loisirs en forme de caisse (1) selon l'une des revendications précédentes, **caractérisé en ce**
**qu'**un élément de cadre (9) est, au moyen d'au moins un moyen de liaison (10, 10a), relié au moins à la paroi de véhicule (4), au soubassement de carrosserie (2) ou au montant C de véhicule.

7. Camping-car ou véhicule de loisirs en forme de caisse (1) selon l'une des revendications précédentes, **caractérisé en ce que**
l'élément de cadre (9) est, au moyen d'une liaison adhésive et/ou vissée, relié au moins au soubassement de carrosserie (2) ou au montant C de véhicule.

8. Camping-car ou véhicule de loisirs en forme de caisse (1) selon l'une des revendications précédentes, **caractérisé en ce que**
l'élément de cadre (9) est relié, à la manière d'une bride, au côté intérieur (IS) et sur le côté extérieur (AS) de la paroi de véhicule (4).

9. Camping-car ou véhicule de loisirs en forme de caisse (1) selon l'une des revendications précédentes, **caractérisé en ce**
**qu'**au moins le côté extérieur (AS) de la paroi de véhicule (4) comporte une ouverture à l'opposé de l'élément de cadre (9).

10. Procédé permettant de produire une ouverture dans une partie d'une paroi de véhicule d'un camping-car ou d'un véhicule de loisirs en forme de caisse selon la revendication 1, **caractérisé par**
les étapes suivantes :
a) séparation d'au moins une partie d'un montant de véhicule et
b) enlèvement d'une partie d'une paroi de véhicule pour produire une ouverture, laquelle est disposée principalement dans une région de la partie de montant séparée, les étapes a) et b) pouvant être effectuées tour à tour dans un ordre quelconque ou simultanément,
un élément de cadre étant introduit au moins dans une région partielle de la partie de paroi et/ou de la partie de montant, de telle sorte que l'élément de cadre (9) soit disposé au moins dans une région partielle du montant C de véhicule discontinu et/ou qu'au moins un élément de cadre (9) soit relié au soubassement de carrosserie (2) et au moins à une région partielle du montant C de véhicule et/ou à un passage de roue (12), l'au moins une paroi de véhicule (4) comprenant au moins une ouverture (14), laquelle est disposée au moins partiellement dans la région d'au moins un bord extérieur (8, 8a) discontinu et une ouverture (15) d'au moins un élément de cadre (9) disposé principalement sur le côté intérieur (IS) et au moins une ouverture (14) dans la paroi de véhicule (4) étant alignées l'une par rapport à l'autre.

11. Procédé selon la revendication 10,
**caractérisé en ce**
**qu'**au moins un dispositif d'ouverture et de fermeture est monté dans la région de la paroi de véhicule, de telle sorte que le dispositif recouvre une grande région de l'ouverture.
